# FASCICULE DE BREVET EUROPEEN

(11) **EP 2 684 452 B1**
(45) Date de publication et mention de la délivrance du brevet: **04.03.2015**
(21) Numéro de dépôt: 13173189.5
(22) Date de dépôt: 21.06.2013
(51) Int. Cl.: A01M 7/00

(54) **Dispositif de suspension de rampe de pulvérisation pour engin agricole**
Aufhängevorrichtung einer Sprührampe für landwirtschaftliche Maschinen
Spray bar suspension device for an agricultural vehicle

(30) Priorité: 10.07.2012 FR 1256619
(43) Date de publication de la demande: 15.01.2014
(73) Titulaire: Exel Industries, 51200 Epernay (FR)
(72) Inventeur: Ballu, Patrick Jean Marie, 51100 Reims (FR)
(74) Mandataire: Gaillarde, Frédéric F. Ch.

(56) Documents cités:
- EP-A1- 0 429 934
- EP-A1- 1 522 218
- FR-A1- 2 595 060

## Description

La présente invention se rapporte à un dispositif de suspension de rampe de pulvérisation pour engin agricole, et à un engin agricole équipé d'un tel dispositif. Un tel dispositif est connu par FR2595060.

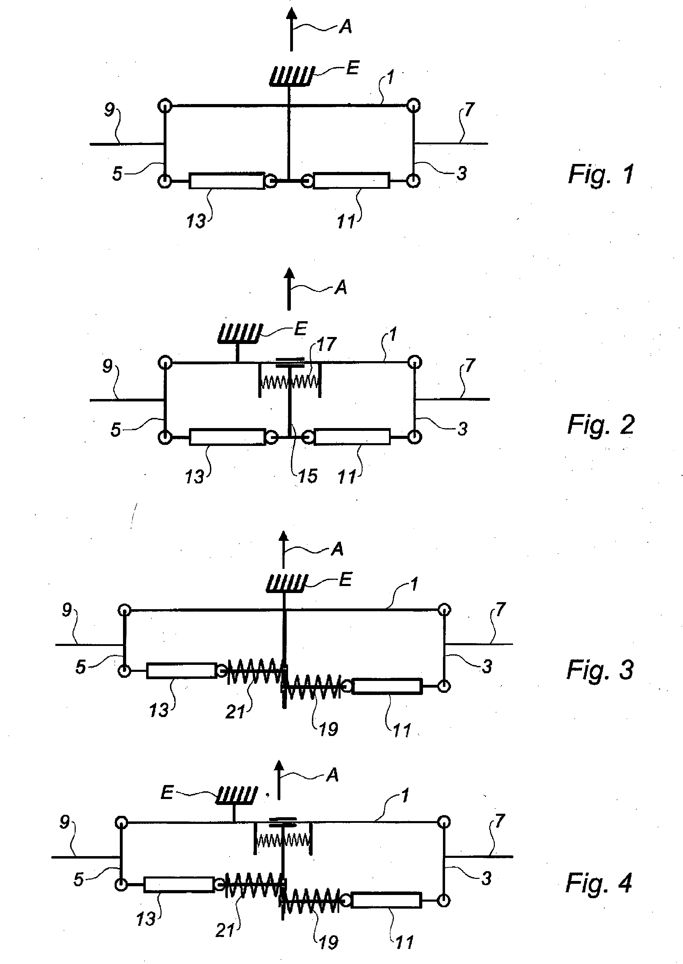

On se reporte à la figure 1 ci-annexée, sur laquelle on a représenté de façon schématique, en vue de dessus, un dispositif de suspension de rampe de pulvérisation de l'état de la technique.

Sur cette figure, la flèche A indique le sens d'avancement de l'engin agricole E équipé de ce dispositif.

Ce dispositif de suspension comprend un cadre fixe 1 monté solidaire sur l'engin E, un support de rampe droite 3 et un support de rampe gauche 5 montés pivotants sur le cadre fixe 1, et des rampes de pulvérisations droite 7 et gauche 9 montées fixes sur ces supports respectifs.

Des vérins d'actionnement droit 11 et gauche 13, interposés entre le cadre fixe 1 et les supports respectifs 3, 5, permettent de faire pivoter ces supports d'une position déployée visible sur la figure 1, dans laquelle les deux rampes de pulvérisation s'étendent transversalement à la direction d'avancement A set ont ainsi prêtes pour la pulvérisation, à une position repliée, dans laquelle les deux supports 3, 5 ont pivoté vers l'avant de l'engin, plaçant ainsi les rampes de pulvérisation 7 et 9 dans une direction sensiblement parallèle à la direction d'avancement A.

Cette position repliée permet notamment à l'engin agricole de circuler sur route.

Un problème constant observé dans l'état de la technique est le mouvement d'oscillation des rampes de pulvérisation 7, 9 en particulier dans certaines situations, telles que les virages, le freinage et l'accélération de l'engin E : on parle classiquement de « coup de fouet ».

Ces oscillations, particulièrement importantes en extrémité de rampe étant donné la grande longueur de ces rampes, engendrent des efforts très importants dans le dispositif de suspension, susceptibles de casser ou de déformer celui-ci.

Pour cette raison, différents systèmes d'amortissement de ces oscillations ont été envisagés dans la technique antérieure.

Ainsi, dans le dispositif de la figure 2, un coulisseau 15 est interposé entre les deux vérins 11 et 13, lequel peut coulisser sur le cadre fixe en étant ramené vers une position centrale d'équilibre par des moyens élastiques tels qu'un ressort 17. Ce dispositif de la technique antérieure permet le pivotement avec rappel élastique des supports 3, 5 et donc des rampes associées 7, 9 tant vers l'avant que vers l'arrière de l'engin E, sans déphasage.

Dans le dispositif de la technique antérieure représenté à la figure 3, des ressorts de compression 19, 21 sont interposés respectivement entre les vérins 11, 13 et le cadre fixe 1.

Ces ressorts permettent une rotation avec rappel élastique des rampes 7, 9 uniquement vers l'arrière de l'engin E, sans déphasage.

Le dispositif de la technique antérieure représenté à la figure 4 résulte d'une combinaison des deux précédents, et comprend ainsi non seulement un coulisseau 15 rappelé élastiquement à sa position d'équilibre par le ressort 17, mais également des ressorts de compression 19 et 21 interposés entre ce coulisseau 15 et les vérins respectifs 11, 13.

Ce dispositif de la technique antérieure permet à la fois des rotations des rampes 7, 9 vers l'avant et vers l'arrière de l'engin E, et un déphasage dans le temps des oscillations de ces deux rampes, notamment lors des virages, freinages, accélérations de l'engin E.

La présente invention vise à fournir un dispositif de suspension de rampes de pulvérisation pour engin agricole permettant d'améliorer les amortissements des oscillations des deux rampes de pulvérisation, par rapport aux dispositifs de la technique antérieure ci-avant exposés.

On atteint ce but de l'invention avec un dispositif de suspension de rampe de pulvérisation pour engin agricole, comprenant un cadre fixe, un support de rampe droite et un support de rampe gauche montés pivotants sur ce cadre fixe, et des moyens d'amortissement interposés entre chacun de ces supports et le cadre fixe, remarquable en ce que lesdits moyens d'amortissement comprennent :
- deux appuis de rotation solidaires dudit cadre fixe,
- des structures droite et gauche articulées respectivement auxdits supports droit et gauche, et montées chacune pivotante de manière alternative sur lesdits appuis de rotation, et
- des moyens élastiques dits principaux interposés respectivement entre chacune desdites structures droite et gauche et ledit cadre fixe,
de sorte qu'une oscillation de chaque support autour de sa position normale de fonctionnement a pour effet de faire basculer la structure associé à ce support de l'un à l'autre desdits appuis de rotation, puis à faire pivoter cette structure autour de cet appui, à l'encontre desdits moyens élastiques.

Ces mouvements de basculement amorti de chaque structure sur les appuis de rotation permet d'amortir de manière très efficace, c'est-à-dire en absorbant le maximum d'énergie, les mouvements de fouet des rampes de pulvérisation, tant vers l'avant que vers l'arrière, et ce lors des virages, accélérations, décélérations.

Suivant d'autres caractéristiques optionnelles de ce dispositif de suspension selon l'invention :
- des moyens élastiques dits secondaires sont interposés entre lesdites structures droite et gauche ;
- lesdits moyens élastiques secondaires sont dimensionnés de sorte que des oscillations d'amplitude relativement faible de l'un desdits supports soient sans effet sur l'autre support, et des oscillations d'amplitude relativement importante de l'un desdits supports entraîne des oscillations de l'autre support ;
- lesdits moyens élastiques primaires comprennent, pour chaque structure, une pluralité des ressorts travaillant en compression, disposés de manière à engendrer des bras de leviers différents sur la structure concernée ;
- des vérins de pliage/dépliage des rampes de pulvérisation sont interposés entre chaque support et sa structure associée.

La présente invention se rapporte également à un engin de pulvérisation agricole, remarquable en ce qu'il est équipé d'un dispositif conforme à ce qui précède, supportant des rampes de pulvérisation montées sur lesdits supports.

D'autres caractéristiques et avantages de la présente invention apparaîtront à la lumière de la description qui va suivre, et à l'examen des figures ci-annexées, dans lesquelles :
- les figures 1 à 4 décrivent de manière schématique différents dispositifs de suspension de rampes de pulvérisation pour engin agricole de la technique antérieure, décrits en préambule de la présente description,
- la figure 5 représente de manière schématique un dispositif de suspension de rampe de pulvérisation pour engin agricole selon la présente invention, en position de repos,
- la figure 6 représente ce dispositif lors d'un virage à gauche avec une accélération relativement faible,
- la figure 7 représente ce dispositif dans une situation de virage à gauche avec une accélération relativement importante,
- la figure 8 représente ce dispositif dans une situation de freinage de l'engin agricole,
- la figure 9 représente ce dispositif juste après le freinage et,
- les figures 10 et 11 sont analogues respectivement aux figures 8 et 9, pour une situation d'accélération de l'engin agricole.

Sur l'ensemble de ces figures, des références identiques ou analogues désignent des organes ou ensembles d'organes identiques ou analogues.

Dans ce qui suit, on utilisera les adjectifs « droit » ou « droite » et « gauche » : ces termes doivent s'entendre comme « à droite » et « à gauche » par rapport au sens d'avancement de l'engin E, indiqué par la flèche A sur les différentes figures.

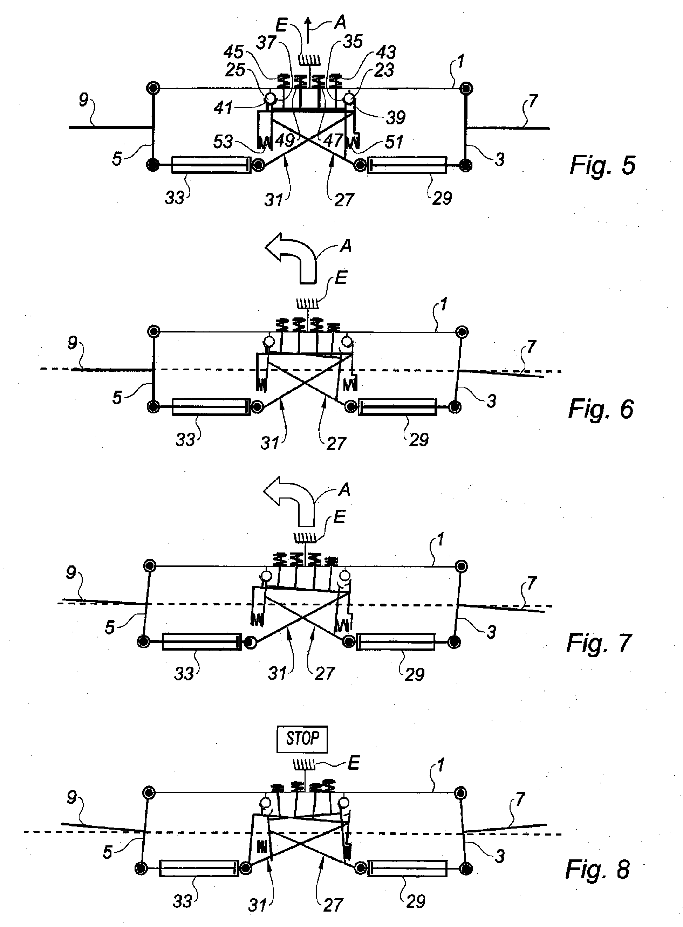

On se reporte à la figure 5, sur laquelle on peut voir que le dispositif de suspension selon l'invention comprend un cadre fixe 1, sur lequel sont montés pivotants un support droit 3 et un support gauche 5, des rampes de pulvérisation droite 7 et gauche 9 étant respectivement montées de manière fixe sur ces deux supports.

Des moyens d'amortissement sont prévus entre ces deux supports et le cadre fixe 1 comme il va être décrit dans ce qui suit.

Ces moyens d'amortissement comprennent des moyens d'appui en rotation droit 23 et gauche 25 montés solidaires sur le cadre fixe 1, ces moyens d'appui pouvant se présenter sous forme de boules ou de cylindres.

Une structure droite 27 est articulée sur un vérin droit d'actionnement 29, lui-même articulé sur le support droit 3.

De même, une structure gauche 31 est articulée sur un vérin d'actionnement gauche 33, lui-même articulé sur le support gauche 5.

La structure droite 27 comporte deux chapes droite 35 et gauche 37 épousant la forme des appuis respectifs 23 et 25, et s'étendant sur sensiblement le quart de la circonférence de ces appuis.

De même, la structure gauche 31 comporte des chapes droite 39 et gauche 41, épousant les formes des appuis respectifs 23 et 25, et s'étendant sur des quarts de circonférence de ces appuis, de manière complémentaire aux chapes 35 et 37 de la structure droite 27.

Deux ressorts de compression principaux 43 et 45 sont interposés entre la structure droite 27 et le cadre fixe 1.

De même, deux autres ressorts de compression principaux 47 et 49 sont interposés entre la structure gauche 31 et le cadre fixe 1.

De manière optionnelle, des ressorts secondaires de compression 51 et 53 sont interposés, respectivement à droite et à gauche, entre la structure droite 27 et la structure gauche 31.

Le mode de fonctionnement et les avantages du dispositif qui vient d'être décrit sont les suivants.

On se reporte à la figure 6, sur laquelle la flèche A indique que l'engin agricole E équipé du dispositif selon l'invention effectue un virage vers la gauche, avec une faible accélération.

Dans ce cas de figure, la rampe droite 7, située à l'extérieur du virage, a tendance à rester à l'arrière de l'engin, et donc à pivoter dans le sens des aiguilles d'une montre, comme cela est visible à la figure 6.

Sous l'effet de cette rotation de la rampe 7 et de son support droit associé 3, les ressorts principaux 43 et 45 sont comprimés, et une rotation de la structure droite 27 s'effectue autour de l'appui gauche 25, grâce à la chape gauche 37 de la structure droite 27.

Ce faisant, le ressort secondaire gauche 53 est comprimé, mais pas suffisamment pour provoquer un déplacement de la structure gauche 31, compte tenu de l'accélération relativement faible en jeu.

Après ce mouvement vers l'arrière, la rampe droite 7 est ramenée vers l'avant de l'engin E, sous l'effet des ressorts principaux 43, 45 et du ressort secondaire 53.

La chape droite 35 de la structure droite 27 vient alors en appui sur l'appui droit 23, permettant ainsi une rotation de la structure droite 27 autour de cet appui droit 23.

Les ressorts principaux 43, 45 ainsi que le ressort secondaire 51 sont alors comprimés, et l'on comprend donc qu'un mouvement d'oscillations rapidement amorties de la rampe droite 7 autour de sa position d'équilibre, se met en place.

La rapidité de l'amortissement est procurée par l'effet combiné des ressorts principaux 43, 45, secondaires 51, 53, et du basculement du support 27 de l'un à l'autre des appuis de rotation 23 et 25.

En cas de sollicitation plus importante, provenant par exemple d'un virage à gauche A avec une accélération plus élevée, la rotation de la structure droite 27 autour de l'appui gauche 25 présente une course suffisamment importante pour entrainer à son tour la rotation dans le sens des aiguilles d'une montre de la structure gauche 31 autour de l'appui gauche 25, par l'intermédiaire du ressort secondaire gauche 53, comme cela est visible à la figure 7.

Ainsi, par le jeu combiné de ces structures de support 27 et 31, la rotation de la rampe droite 7 dans le sens des aiguilles d'une montre entraine également la rotation de la rampe gauche 9 dans le même sens.

Sous l'action des ressorts 43, 45, 47, 49, 53, les rampes droite 7 et gauche 9 sont ensuite rappelées vers une position inverse de celle représentée à la figure 7, dans laquelle elles ont donc pivoté dans le sens contraire des aiguilles d'une montre par rapport à leur position d'équilibre.

On comprend donc que les ressorts 43, 45, 47, 49, 51, 53, ainsi que le basculement de structures 27, 31 sur les appuis 23, 25, permettent d'absorber l'énergie transmise par les rampes 7 et 9 du fait des accélérations de l'engin agricole E.

Plus particulièrement, le déphasage des rampes droite 7 et gauche 9 que l'on peut observer sur la figure 7, de par lequel la rampe gauche 9 revient vers l'arrière de l'engin E tandis que la rampe droite 7 revient vers l'avant de cet engin E, et inversement, permet d'annuler les énergies transmises à ces deux rampes.

En situation de freinage, représentée à la figure 8, les deux rampes 7, 9 ont tendance à partir vers l'avant de l'engin E, entrainant ainsi un pivotement des supports droit 3 et gauche 5, et par là même des structures droite 27 et gauche 31, respectivement dans le sens inverse et dans le sens des aiguilles d'une montre.

Ce faisant, les ressorts 43, 45, 47, 59, 51 sont comprimés de différents degrés, le ressort 53 étant quant à lui détendu.

La chape gauche 37 du support droit 27 s'écarte de l'appui gauche 25, de sorte que le support droit 27 pivote autour de l'appui droit 23.

Inversement, la chape droite 39 du support gauche 31 s'écarte de l'appui droit 23, de sorte que le support gauche 31 pivote autour de l'appui gauche 25.

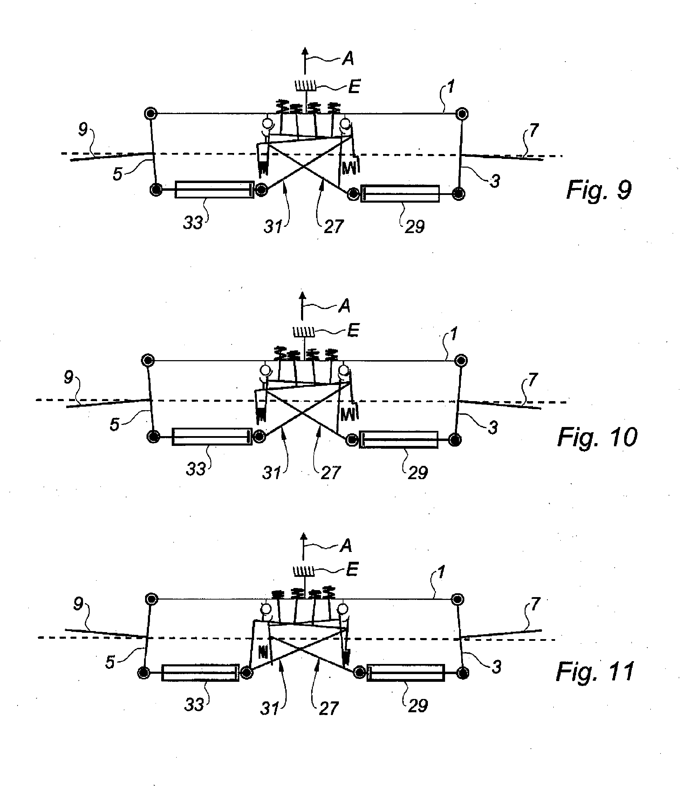

De par le rappel de différents moyens élastiques susmentionnés, les rampes droite et gauche 7 et 9 sont alors ramenées vers l'arrière de l'appareil, comme cela est visible sur la figure 9, entrainant ainsi la compression du ressort secondaire gauche 53 et l'extension du ressort secondaire 51.

Un régime d'oscillation très rapidement amorti, permettant de dissiper efficacement l'énergie transmise par les rampes, se met ainsi en place.

De même, en situation d'accélération représentée à la figure 10, les deux rampes 7 et 9 sont entrainées vers l'arrière de l'engin E, entrainant la compression des différents ressorts principaux 43, 45, 47, 49, la compression du ressort secondaire gauche 53 et l'extension du ressort secondaire droit 51.

Une fois terminée l'accélération, les deux rampes 7 et 9 ont tendance à aller vers l'avant de l'engin agricole E, comme cela est visible sur la figure 11, comprimant ainsi le ressort secondaire droit 51 et relâchant le ressort secondaire gauche 53.

Là encore, un régime d'oscillations très rapidement amorties se met en place, permettant de dissiper très efficacement l'énergie transmise par les rampes 7 et 9.

Comme on aura compris à la lumière de la description qui précède, le dispositif de suspension selon l'invention permet de dissiper de manière très efficace l'énergie transmise aux rampes de pulvérisation de par les différentes accélérations de l'engin agricole qui les supporte.

Bien entendu, la présente invention n'est nullement limitée au mode de réalisation décrit et représenté, fourni à titre de simple exemple.

## Revendications

1. Dispositif de suspension de rampe de pulvérisation pour engin agricole (E), comprenant un cadre fixe (1), un support de rampe droit (3) et un support de rampe gauche (5) montés pivotants sur ce cadre fixe (1), et des moyens d'amortissement interposés entre chacun de ces supports et le cadre fixe, remarquable en ce que lesdits moyens d'amortissement comprennent :
- deux appuis de rotation (23, 25) solidaires dudit cadre fixe (1),
- des structures droite (27) et gauche (31) articulées respectivement auxdits supports droit (3) et gauche (5), et montées chacune pivotante de manière alternative sur lesdits appuis de rotation (23, 25), et
- des moyens élastiques dits principaux (43, 45, 47, 49) interposés respectivement entre chacune desdites structures droite (3) et gauche (5) et ledit cadre fixe (1),
de sorte qu'une oscillation de chaque support (3, 5) autour de sa position normale de fonctionnement a pour effet de faire basculer la structure associée à ce support (3, 5) de l'un à l'autre desdits appuis de rotation (23, 25), puis à faire pivoter cette structure (3, 5) autour de cet appui (23, 25), à l'encontre desdits moyens élastiques (43, 45, 47, 49).

2. Dispositif selon la revendication 1, dans lequel des moyens élastiques dits secondaires (51, 53) sont interposés entre lesdites structures droite (3) et gauche (5).

3. Dispositif selon la revendication 2, dans lequel lesdits moyens élastiques secondaires (51, 53) sont dimensionnés de sorte que des oscillations d'amplitude relativement faible de l'un desdits supports (3, 5) soient sans effet sur l'autre support (5, 3), et des oscillations d'amplitude relativement importante de l'un desdits supports (3, 5) entraîne des oscillations de l'autre support (5, 3).

4. Dispositif selon l'une quelconque des revendications précédentes, dans lequel lesdits moyens élastiques primaires comprennent, pour chaque structure, une pluralité des ressorts (43, 45, 47, 49) travaillant en compression, disposés de manière à engendrer des bras de leviers différents sur la structure concernée (27, 31).

5. Dispositif selon l'une quelconque des revendications précédentes, dans lequel des vérins (29, 33) de pliage/dépliage des rampes de pulvérisation (7, 9) sont interposés entre chaque support (3, 5) et sa structure associée (27, 31).

6. Engin de pulvérisation agricole, remarquable en ce qu'il est équipé d'un dispositif conforme à l'une quelconque des revendications précédentes, supportant des rampes de pulvérisation (7, 9) montées sur lesdits supports (3, 5).

## Patentansprüche

1. Aufhängevorrichtung einer Sprührampe für eine landwirtschaftliche Maschine (E), umfassend einen festen Rahmen (1), eine rechte Rampenhalterung (3) und eine linke Rampenhalterung (5), die schwenkend auf den festen Rahmen (1) montiert sind, und Dämpfungsmittel, die zwischen jeder dieser Halterungen und dem festen Rahmen gestellt sind, **dadurch gekennzeichnet, dass** die Dämpfungsmittel Folgendes umfassen:
- zwei Drehstützen (23, 25), die einstückig mit dem festen Rahmen (1) sind,
- rechte (27) und linke (31) Strukturen, die jeweils mit der rechten (3) und der linken (5) Halterung gelenkig verbunden und jede schenkend auf alternative Weise auf den Drehstützen (23, 25) montiert sind, und
- elastische Mittel, genannt Hauptmittel (43, 45, 47, 49), die jeweils zwischen jeder der rechten (3) und der linken (5) Struktur und dem festen Rahmen (1) gestellt sind,
so dass eine Schwingung jeder Halterung (3, 5) um ihre normale Betriebsposition zum Ergebnis hat, die Struktur, die mit dieser Halterung (3, 5) assoziiert ist, von der einen zur anderen der Drehstützen (23, 25) kippen zu lassen, dann diese Struktur (3, 5) um diese Stütze (23, 25) entgegen den elastischen Mitteln (43, 45, 47, 49).schwenken zu lassen.

2. Vorrichtung nach Anspruch 1, wobei elastische Mittel, genannt sekundäre Mittel (51, 53), zwischen die rechte (3) und die linke (5) Struktur gestellt sind.

3. Vorrichtung nach Anspruch 2, wobei die sekundären elastischen Mittel (51, 53) derart abgemessen sind, dass Schwingungen mit einer relativ schwachen Amplitude einer der Halterungen (3, 5) ohne Auswirkung auf die andere Halterung (5, 3) sind, und Schwingungen mit einer relativ bedeutenden Amplitude einer der Halterungen (3, 5) Schwingungen der anderen Halterung (5, 3) verursachen.

4. Vorrichtung nach einem der vorhergehenden Ansprüche, wobei primäre elastische Mittel für jede Struktur eine Vielzahl von Federn (43, 45, 47, 49) umfassen, die bei Druck ansprechen, die derart angeordnet sind, dass sie verschiedene Hebelarme auf der betroffenen Struktur (27, 31) erzeugen.

5. Vorrichtung nach einem der vorhergehenden Ansprüche, wobei Auf-/Einklappzylinder (29, 33) der Sprührampen (7, 9) zwischen jede Halterung (3, 5) und ihre assoziierte Struktur (27, 31) gestellt sind.

6. Landwirtschaftliche Sprühmaschine, **dadurch gekennzeichnet, dass** sie mit einer Vorrichtung nach einem der vorhergehenden Ansprüche ausgestattet ist, die Sprührampen (7, 9) hält, die auf den Halterungen (3, 5) montiert sind.

## Claims

1. A spray bar suspension device for an agricultural vehicle (E), comprising a stationary frame (1), a right bar holder (3) and a left bar holder (5) that are pivotably mounted on said stationary frame (1), and damping elements inserted between each of said holders and the stationary frame, remarkable in that said damping elements comprise:
- two rotational supports (23, 25) secured to said stationary frame (1),
- right (27) and left (31) structures respectively articulated to said right (3) and left (5) holders, and each pivotably mounted alternating on said rotational supports (23, 25), and
- so-called primary elastic elements (43, 45, 47, 49) respectively inserted between each of said right (3) and left (5) structures and said stationary frame (1),
such that an oscillation of each holder (3, 5) around its normal operating position results in tilting the structure associated with that holder (3, 5) from one to the other of said rotational supports (23, 25), then pivoting said structure (3, 5) around said support (23, 25), against the elastic elements (43, 45, 47, 49).

2. The device according to claim 1, wherein so-called secondary elastic elements (51, 53) are inserted between said right (3) and left (5) structures.

3. The device according to claim 2, wherein said secondary elastic elements (51, 53) are dimensioned such that oscillations with a relatively small amplitude of one of said holders (3, 5) have no effect on the other holder (5, 3), and oscillations with a relatively significant amplitude of one of said holders (3, 5) cause oscillations of the other holder (5, 3).

4. The device according to any one of the preceding claims, wherein said primary elastic elements comprise, for each structure, a plurality of springs (43, 45, 47, 49) working in compression, positioned so as to create different lever arms on the concerned structure (27, 31).

5. The device according to any one of the preceding claims, wherein cylinders (29, 33) for folding/unfolding the spray bars (7, 9) are inserted between each holder (3, 5) and its associated structure (27, 31).

6. An agricultural spray vehicle, remarkable in that it is equipped with a device according to any one of the preceding claims, supporting spray bars (7, 9) mounted on said holders (3, 5).
